# EUROPÄISCHE PATENTSCHRIFT

(11) **EP 1 828 586 B1**
(45) Veröffentlichungstag und Bekanntmachung des Hinweises auf die Patenterteilung: **12.01.2011**
(21) Anmeldenummer: 05814203.5
(22) Anmeldetag: 29.11.2005
(51) Int. Cl.: F02F 3/00, F16J 9/08

(54) **KOLBENFENSTER MIT SCUPPERSOLTS UND FREIGUSS**
ROTOR RECESS WITH SCUPPER SLOTS AND FREE CASTING
FENETRE DE PISTON PRESENTANT DES FENTES DE SAIGNEE A COULEE LIBRE

(30) Priorität: 22.12.2004 DE 102004061777
(43) Veröffentlichungstag der Anmeldung: 05.09.2007
(73) Patentinhaber: KS Kolbenschmidt GmbH, 74172 Neckarsulm (DE)
(72) Erfinder: OTTLICZKY, Emmerich, 74670 Forchtenberg (DE); RATZKY, Franz, 74834 Elztal (DE); RIES, Norbert, 97900 Külsheim (DE)
(74) Vertreter: Greif, Thomas
(86) Internationale Anmeldenummer: PCT/EP2005/012708
(87) Internationale Veröffentlichungsnummer: WO 2006/072293

(56) Entgegenhaltungen:
- EP-A- 0 529 714
- US-A- 1 675 174
- US-A1- 2002 046 593
- PATENT ABSTRACTS OF JAPAN Bd. 1996, Nr. 09, 30. September 1996 (1996-09-30) & JP 08 121243 A (NIPPON SOKEN INC; TOYOTA MOTOR CORP), 14. Mai 1996 (1996-05-14)
- PATENT ABSTRACTS OF JAPAN Bd. 1997, Nr. 08, 29. August 1997 (1997-08-29) & JP 09 112342 A (TOYOTA MOTOR CORP), 28. April 1997 (1997-04-28)

## Beschreibung

Die Erfindung betrifft einen Kolben einer Brennkraftmaschine mit den Merkmalen des Oberbegriffs des Patentanspruchs 1.

Kolben von Brennkraftmaschinen, die einen Kolbenboden mit einem Ringfeld und einem unterhalb dessen angeordneten Kolbenschaft aufweisen, sind bekannt. Solche Kolben werden beispielsweise auch als Kastenkolben oder Kolben mit einem Kastendesign bezeichnet. Es ist bekannt, dass im Bereich des Kolbenschaftes eine Bolzenbohrung vorhanden ist, wobei um die Bolzenbohrung herum eine gegenüber dem äußeren Durchmesser des Kolbens zurückgesetzte Fensterfläche ausgebildet ist. Weiterhin ist es bekannt, dass im Bereich der untersten Ringnut innerhalb des Ringfeldes des Kolbens zumindest eine Vertiefung vorhanden ist, über die das von dem untersten Ring gesammelte Öl im Betreib des Kolbens gesammelt und über die Fensterfläche in Richtung der Unterkante des Kolbenschaftes geleitet wird. Im Betrieb der bekannten Kolben hat sich herausgestellt, dass die Vertiefungen derart oberhalb der Bolzenbohrung angeordnet sind, dass sie sich in einem besonders beanspruchten Bereich befindet. Dieser besonders beanspruchte Bereich des Kolbens befindet sich rechts und links neben dem Scheitelpunkt der Bolzenbohrung, da sich der Kolben, insbesondere der Kolbenboden, während seines Betriebes um den in der Bolzenbohrung angeordneten Bolzen verformt. Wenn nun die Vertiefungen in diesem besonders beanspruchten Bereich liegen, bilden sie eine Sollbruchstelle, so dass es im Betrieb des Kolbens, insbesondere beim Einsatz in heutigen hoch beanspruchten Dieselbrennkraftmaschinen, zu Rissen kommt. Solche Ausgestaltungen sind aus JP 08 121243A, EP-A-0 529 714, US-A-1 675 174 oder US 2002/046593 A1 bekannt.

Demgegenüber schafft die Erfindung Abhilfe dadurch, dass die zumindest eine Vertiefung außerhalb des besonders beanspruchten Bereiches oberhalb der Bolzenbohrung und somit in etwa am Rand der Fensterfläche im Übergangsbereich zu der Schaftfläche des Kolbenschaftes angeordnet ist, wobei sich der besonders beanspruchte Bereich ausgehend von einem Scheitelpunkt der Bolzenbohrung in Richtung der Unterkante des Ringfeldes erstreckt.

Damit bleibt einerseits die Wirkung der Vertiefungen erhalten, dass über sie nämlich das vom Ölabstreifring in der letzten Ringnut gesammelte Öl über die Fensterfläche nach unten abgeleitet werden kann. Andererseits wird eine Rissbildung wirksam verhindert, weil die zumindest eine Vertiefung in einem solchen Bereich im oberen Bereich der Fensterfläche um die Bolzenbohrung herum angeordnet ist, der nicht besonders beansprucht ist.

Ergänzend dazu ist vorgesehen, dass in einem Übergangsbereich von der Vertiefung in Richtung der Fensterfläche eine Verdickung vorgesehen ist, die auch hinter dem äußeren Durchmesser des Kolbens zurückgesetzt ist. Dadurch wird die Entstehung der Rissbildung weiterhin wirksam verhindert, wobei eine solche Verdickung auch dazu beitragen kann, die Vertiefung in einem Bereich neben dem Scheitelpunkt der Bolzenbohrung anzuordnen, der dennoch besonders beansprucht sein kann.

In Weiterbildung der Erfindung ist vorgesehen, dass die gegenüber dem äußern Durchmesser des Kolbens zurückgesetzten Flächen, bei denen es sich um die zumindest eine Vertiefung, die Verdickung sowie die gesamte Fensterfläche um die Bolzenbohrung herum handeln kann, zumindest teilweise, insbesondere vollständig im Freiguss und / oder durch spanabhebende Bearbeitung herstellbar sind. Werden die zurückgesetzten Flächen im Freiguss hergesellt, weist die Negativ-Gießform des Kolbens beziehungsweise des Kolbenrohlings vorstehende Bereiche auf, die nach dem Gießen des Kolbenrohlings die zurückgesetzten Flächen bilden. Dies hat den Vorteil, dass einmal eine Gießform mit den entsprechenden vorstehenden Bereichen gefertigt werden muss, die dann die zurückgesetzten Flächen bei jedem Guß eines Kolbenrohlings abbilden. Ergänzend oder alternativ dazu ist es denkbar, dass zum Beispiel ein Kolbenrohling mit einem gleichbleibenden und durchgehenden Außendurchmesser gegossen wird und anschließend bei der Feinbearbeitung die zurückgesetzten Flächen durch spanabhebende Bearbeitung abgetragen werden. Dies bietet sich insbesondere dann an, wenn bei der Feinbearbeitung des Kolbens numerisch gesteuerte Maschinen (CNC-Maschinen) zur Anwendung kommen. Bei der Herstellung der zurückgesetzten Flächen ist unbedingt zu beachten, dass die Übergänge von tiefer liegenden Flächen, wobei der Bezug der äußere Durchmesser des Kolbens ist, gerundet ausgeführt werden, um Sollbruchstellen, die einen Riss während des Betriebes des Kolben ermöglichen würden, zu verhindern.

Ausführungsbeispiele der Erfindung, auf die diese jedoch nicht beschränkt sind, sind im folgenden beschrieben und an Hand der Figuren erläutert.

Es zeigen:
Figur 2: Schnitt A-A im Maßstab 2 zu 1 gemäß Figur 1,
Figur 3: Ein weiteres Ausführungsbeispiel eines erfindungsgemäßen Kolbens,
Figur 4: Schnitt A-A im Maßstab 1 zu 1 gemäß Figur 3.

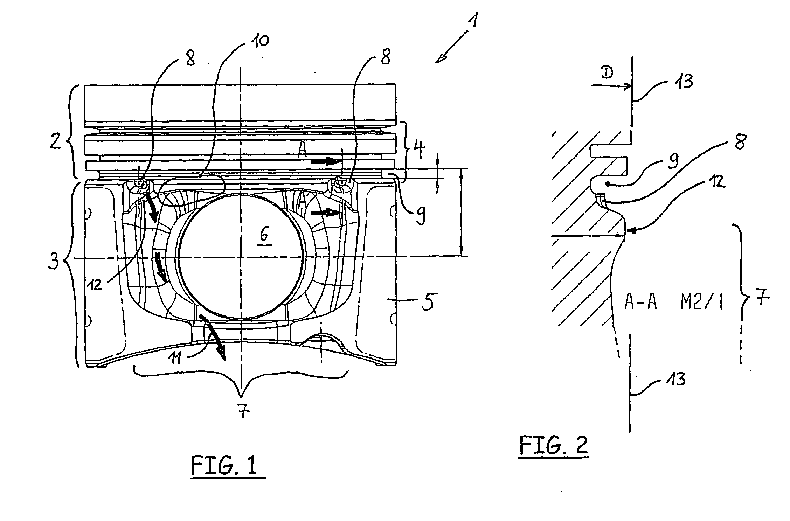

Figur 1 zeigt einen einteiligen Kolben 1 im sogenannten Kastendesign, wobei der Kolben 1 einen Kolbenboden 2 (gegebenenfalls mit einer hier nicht dargestellten Brennraummulde) und einen unterhalb dessen angeordneten Kolbenschaft 3 aufweist. An dieser sei darauf hingewiesen, daß die Erfindung für beliebige Kolbenbauarten (so auch für Pendelschaftkolben) anwendbar ist.

Der Kolbenboden 2 weist in an sich bekannter Weise ein Ringfeld 4 mit im Regelfall drei Ringnuten auf, wobei der Kolbenschaft 3 zwei diametral gegenüberliegende Schaftflächen 5 aufweist, mit denen der Kolben 1 im Betrieb der Brennkraftmaschine sich an den Zylinderlaufflächen abstützt und an diesen geführt ist. Weiterhin weist der Kolbenschaft 3 eine Bolzenbohrung 6 zur Aufnahme eines Kolbenbolzens auf, mit dem der Kolben 1 über ein hier nicht dargestelltes Pleuel verbunden ist. Im Bereich um die Bolzenbohrung 6 herum ist eine Fensterfläche 7 vorgesehen, die hinter dem äußeren Durchmesser des Kolbens 1 zurückgesetzt ist, während auf dem äußeren Durchmesser des Kolbens 1 die Schaftflächen 5 liegen. Zumindest eine Vertiefung 8 (im Regelfall vier Vertiefungen) ist (sind) im Bereich einer untersten Ringnut 9 vorhanden, wobei diese Vertiefung 8 auch als Scapperslot bezeichnet wird. Links von dem Scheitelpunkt der Bolzenbohrung 6 ist mit der Bezugsziffer 10 ein im Betrieb des Kolbens 1 besonders beanspruchter Bereich eingezeichnet, wobei dieser besonders beanspruchte Bereich 10 auch rechts vom Scheitelpunkt der Bolzenbohrung 6 vorhanden ist. Die Vertiefungen 8 bewirken, dass das von dem in der untersten Ringnut 9 angeordneten Ölabstreifring gesammelte Öl über die neben der Bolzenbohrung 6 vorhandene Fensterfläche 7 nach unten (bei Betrachtung der Figur 1) abgeleitet wird, so dass ein mit den Pfeilen bezeichneter Ölfluss 11 entsteht. Die Anordnung der Vertiefungen 8 neben dem besonders beanspruchten Bereich 10 hat somit den Vorteil, dass sich im Bereich der Vertiefungen 8 keine Risse mehr bilden können, da hier die Materialstärke aufgrund der zurückgesetzten Flächen geringer ist und eine Rissbildung drohen würde, wenn die Vertiefungen 8 im besonders beanspruchten Bereich 10 angeordnet wären. Bei Betrachtung der Figur 1 ist erkennbar, dass somit die Vertiefungen 8 in etwa oberhalb desjenigen Bereiches angeordnet sind, bei dem die Fensterfläche 7 in die Schaftflächen 5 übergeht. Zur weiteren wirksamen Verhinderung von Rissbildungen ist noch beim Übergang von der Vertiefung 8 in die Fensterfläche 7 eine Verdickung 12 vorgesehen, wobei je nach geometrischer Gestaltung (insbesondere Tiefe der Vertiefung 8, Dimensionierung der Verdickung 12 und Tiefe der Fensterfläche 7) die Vertiefung 8 auch im Randbereich (der vom Scheitelpunkt der Bolzenbohrung entfernte Bereich) angeordnet werden kann.

Zur weiteren Verdeutlichung der Erfindung wird noch auf die Figur 2 verwiesen, die einen Schnitt A-A im doppelten Maßstab gemäß Figur 1 darstellt. Hier sind sowohl die Lage der Vertiefung 8, der untersten Ringnut 9 und der Verdickung 12 erkennbar. Diese Bereiche, genauso wie die Fensterfläche 7, sind gegenüber einem äußeren Durchmesser D, der mit der Bezugsziffer 13 versehen ist, nach innen zurückgesetzt. Das Maß der Zurücksetzung richtet sich nach den geometrischen Verhältnisse und der Kräfteverteilung, wobei die Tiefe der Vertiefung 8 so zu wählen ist, dass das von dem in der untersten Ringnut 9 angeordneten Ölabstreifring gesammelte Öl über den Übergangsbereich in die Fensterfläche 7, insbesondere über die Verdickung 12, in ausreichender Menge während der Bewegung des Kolbens 1 abgeführt werden kann. Zur Vermeidung von Rissbildungen ist dabei die Verdickung 12 verstärkt ausgeführt, dass heißt, dass sie gegenüber dem äußeren Durchmesser D weniger zurückgesetzt ist als die Vertiefung 8 beziehungsweise die Fensterfläche 7. Besonders wichtig bei der Ausgestaltung gemäß Figur 2 ist es, dass, wie gezeigt, die Übergangsbereich von der untersten Ringnut 9 beziehungsweise der Vertiefung 8 über die Verdickung 12 in Richtung der Fensterfläche 7 gerundet ausgeführt sind, genau so wie übrigens auch der Übergangsbereich der Fensterfläche 7 in die Schaftfläche 5. Die Verdickung 12 bildet somit eine Materialansammlung zur Verstärkung und Verhinderung von Rissbildungen in diesem Bereich, gewährleistet gleichzeitig aber auch den Ölfluss 11, da sie hinter dem äußeren Durchmesser D zurückgesetzt ist. Im Regelfall wird die Vertiefung 8 eine runde Form aufweisen, die zum Beispiel durch eine Bohrung realisiert ist, aber auch im Freiguss hergestellt sein kann: Die Breite des Übergangsbereiches von der Vertiefung 8 in die Fensterfläche 7 und somit die Breite der Verdickung 12 ist vorzugsweise größer als die radiale Erstreckung der Vertiefung 8, um einen ausreichenden Ölfluss 11 in Richtung der Fensterfläche 7 zu gewährleisten. Denkbar ist es aber auch, dass dieser Übergangsbereich die gleiche oder eine kleinere Breite als die der Vertiefung 8 aufweist.

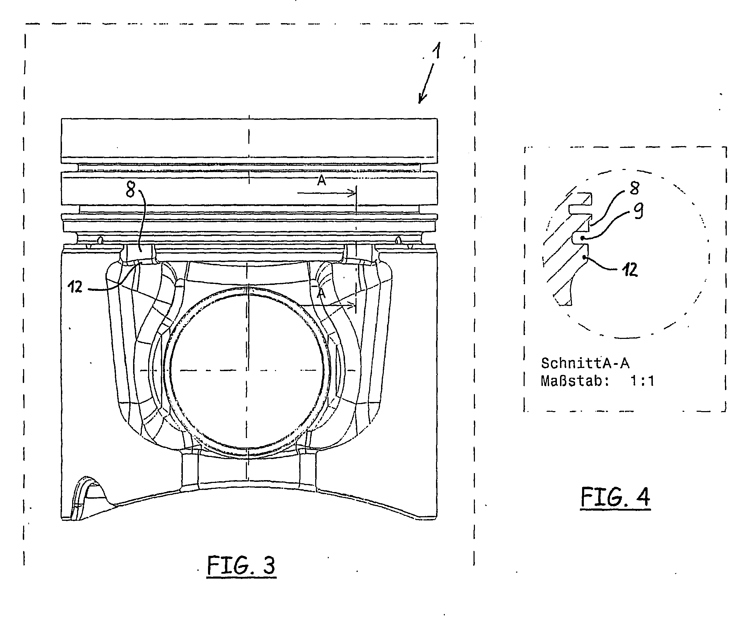

Figur 3 zeigt ein weiteres Ausführungsbeispiel der Erfindung, wobei hier die Vertiefung 8 nicht in runder Form (zum Beispiel als Bohrung realisiert) ausgeführt ist, sondern eine Rechteckform mit abgerundeten Kannten aufweist. Auch hier befinden sich die Vertiefungen 8 wieder außerhalb des besonders beanspruchten Bereiches 10, wobei im Übergangsbereich von der Vertiefung 8 in die Fensterfläche 7 die Verdickung 12 vorhanden ist. Solche Formen der Vertiefung 8, der Verdickung 12 sowie der Fensterfläche 7, wie sie in Figur 3 dargestellt sind, lassen sich in besonders vorteilhafter Weise im Freiguss herstellen. Das schließt allerdings nicht aus, dass nach der gießtechnischen Herstellung dieser Flächen noch eine spanabhebende Bearbeitung, insbesondere eine Feinbearbeitung, erfolgt.

Ergänzend zu Figur 3 wird noch auf Figur 4 verwiesen, die eine Schnitt A-A im Maßstab 1 zu 1 gemäß Figur 3 darstellt. Hier ist noch sehr gut zu erkennen, dass sich die Vertiefung 8 nicht nur im Bereich unterhalb der untersten Ringnut 9 befindet, sondern sich über diese hinweg erstreckt.

Die Erfindung kommt zur Anwendung bei jedem möglichen Kolben 1 einer Brennkraftmaschine, allerdings vorzugsweise bei Kolben aus einem Leichtbauwerkstoff, wie Aluminium, und dann bei größervolumigen Brennkraftmaschinen, insbesondere solche, die dem Antrieb von Lastkraftwagen dienen.

### Bezugszeichenliste

- 1.: Kolben
- 2.: Kolbenboden
- 3.: Kolbenschaft
- 4.: Ringfeld
- 5.: Schaftfläche
- 6.: Bolzenbohrung
- 7.: Fensterfläche
- 8.: Vertiefung
- 9.: unterste Ringnut
- 10.: besonders beanspruchter Bereich
- 11.: Ölfluß
- 12.: Verdickung
- 13.: äußerer Durchmesser D

## Patentansprüche

1. Kolben (1) einer Brennkraftmaschine, aufweisend einen Kolbenboden (2) mit einem Ringfeld (4) und einem unterhalb dessen angeordneten Kolbenschaft (3), der Schaftflächen (5) und eine um eine Bolzenbohrung (6) herum angeordnete und gegenüber einem äußere Durchmesser (13) des Kolbens (1) zurückgesetzte Fensterfläche (7) aufweist, wobei zumindest eine Vertiefung (8) im Bereich einer untersten Ringnut (9) für einen Ölfluß (11) in Richtung der Fensterfläche (7) während der Bewegung des Kolbens (1) vorgesehen ist, und in einem Übergangsbereich von der Vertiefung (8) in Richtung der Fensterfläche (7) eine Verdickung (12) vorgesehen ist, die auch hinter dem äußeren Durchmesser (13) des Kolbens (1) zurückgesetzt ist **dadurch gekennzeichnet, dass** die zumindest eine Vertiefung (8) außerhalb eines besonders beanspruchten Bereiches (10) oberhalb der Bolzenbohrung (6) angeordnet ist, wobei die zumindest eine Vertiefung (8) in demjenlgen Bereich angeordnet ist, bei dem die Fensterfläche (7) in die Schaftfläche (5) übergeht.

2. Kolben (1) nach Anspruch 1, **dadurch gekennzeichnet, dass** die gegenüber dem äußeren Durchmesser (13) des Kolbens (1) zurückgesetzten Flächen zumindest teilweise, insbesondere vollständig, im Freiguß herstellbar sind.

3. Kolben (1) nach Anspruch 1 oder 2, **dadurch gekennzeichnet, dass** die gegenüber dem äußeren Durchmesser (13) des Kolbens (1) zurückgesetzten Flächen zumindest teilweise, insbesondere vollständig durch spanabhebende Bearbeitung herstellbar ist.

## Claims

1. Piston (1) of an internal combustion engine, having a piston crown (2) with a ring area (4) and with a piston shank (3) arranged therebelow, which piston shank (3) has shank surfaces (5) and a window surface (7) which is arranged around a pin bore (6) and is recessed in relation to an outer diameter (13) of the piston (1), with at least one depression (8) being provided, in the region of a lowermost annular groove (9), for an oil flow (11) in the direction of the window surface (7) during the movement of the piston (1), and with a thickened portion (12) being provided in a transition region from the depression (8) in the direction of the window surface (7), which thickened portion (12) is also recessed behind the outer diameter (13) of the piston (1), **characterized in that** the at least one depression (8) is arranged outside a particularly loaded region (10) above the pin bore (6), with the at least one depression (6) being arranged in the region in which the window surface (7) merges into the shank surface (5).

2. Piston (1) according to Claim 1, **characterized in that** those surfaces which are recessed in relation to the outer diameter (13) of the piston (1) can be produced at least partially, in particular entirely, by free casting.

3. Piston (1) according to Claim 1 or 2, **characterized in that** those surfaces which are recessed in relation to the outer diameter (13) of the piston (1) can be produced at least partially, in particular entirely, by a cutting machining process.

## Revendications

1. Piston (1) peur un moteur à combustion interne, présentant un fond de piston (2) avec un champ annulaire (4) et une tige de piston (3) disposée sous celui-ci, qui présente des surfaces de tige (5) et une surface de fenêtre (7) disposée autour d'un alésage de boulon (6) et en retrait par rapport à un diamètre extérieur (13) du piston (1), au moins un renfoncement (8) dans la région d'une rainure annulaire la plus inférieure (9) étant prévu pour un flux d'huile (11) dans à direction de la surface de fenêtre (7) pendant le déplacement du piston (1), et un épaississement (12) étant prévu dans une région de transition depuis le renfoncement (8) dans la direction de La surface de fenêtre (7), Lequel est également en retrait derrière le diamètre extérieur (13) du piston (1), **caractérisé en ce que** l'au moins un renfoncement (8) est disposé en dehors d'une région (10) particulièrement sollicitée au-dessus de l'alésage de boulon (6), l'au moins un renfoncement (8) étant disposé dans la région dans laquelle la surface de fenêtre (7) se prolonge par la surface de tige (5).

2. Piston (1) selon la revendication 1, **caractérisé en ce que** les surfaces en retrait par rapport au diamètre extérieur (13) du piston (1) peuvent être fabriquées au moins en partie, et notamment complètement, par coulée libre.

3. Piston (1) selon la revendication 1 ou 2, **caractérisé en ce que** les surfaces en retrait par rapport au diamètre extérieur (13) du piston (1) peuvent être fabriquées au moins en partie, et notamment complètement, par usinage par enlèvement de copeaux.
